Europäisches Patentamt

European Patent Office

Office européen des brevets

(11) Publication number: **0 084 248**
**B1**

(12) **EUROPEAN PATENT SPECIFICATION**

(45) Date of publication of patent specification: **12.03.86**

(21) Application number: **82306852.3**

(22) Date of filing: **21.12.82**

(51) Int. Cl.⁴: **C 07 C 45/34,** C 07 C 47/02,
C 07 C 49/10, B 01 J 23/64,
B 01 J 27/02

(54) Process for producing carbonyl compounds.

(30) Priority: **22.12.81 JP 206149/81**

(43) Date of publication of application:
**27.07.83 Bulletin 83/30**

(45) Publication of the grant of the patent:
**12.03.86 Bulletin 86/11**

(84) Designated Contracting States:
**BE DE FR GB**

(56) References cited:
DE-A-2 541 571
DE-A-2 613 244
DE-A-2 847 068
GB-A- 967 361
GB-A- 998 465
GB-A-2 070 601

Chemical Abstracts vol.83, no. 5, 4 August
1975, Columbus, Ohio, USA, page 458, column
1, abstract no. 42854a

(73) Proprietor: **TOA NENRYO KOGYO KABUSHIKI
KAISHA
1-1 Hitotsubashi, 1-Chome Chiyoda-Ku
Tokyo 100 (JP)**

(72) Inventor: **Nishikawa, Eiichiro
862-37, Ooaza Kitanagai Miyoshi-machi
Iruma-gun Saitama-ken (JP)**
Inventor: **Shiozawa, Kouji
1515-500, Ooaza Ishizaka Hatoyama-mura
Hiki-gun Saitama-ken (JP)**
Inventor: **Kaneko, Katsumi
2174-19, Ooaza Nishitrurugaoka Ooi-machi
Iruma-gun Saitama-ken (JP)**

(74) Representative: **Northover, Robert Frank et al
ESSO Chemical Limited Esso Chemical Research
Centre P.O. Box 1
Abingdon Oxfordshire, OX13 6BB (GB)**

## Description

The present invention relates to a process for producing aldehydes and/or ketones by oxidizing an olefin in the presence of a specific solid catalyst.

Background of the invention

The so-called Hoechst-Wacker process is known for producing aldehydes and ketones by oxidizing an olefin in a liquid phase homogeneous system in the presence of a catalyst containing a palladium compound, copper compound, and halogen. This process, however, is disadvantageous in that it requires a strong acid such as hydrochloric acid and consequently requires an apparatus made of expensive, corrosion-resistant materials. In addition, the separation and regeneration of the catalyst are not easy and the process is complex, requiring the steps of removing chlorinated by-products.

In order to solve the above-mentioned problems encountered in the Hoechst-Wacker process which is characterized by a homogeneous system, several attempts have been made to carry out the reactions in the presence of a solid catalyst.

For instance, there is known a method (Japanese Patent Publication No. 5765/1970) for oxidizing an olefin with the aid of a catalyst which is prepared by causing activated carbon to adsorb naturally an acid aqueous solution of palladium halide and/or rhodium halide. US 3 471 532 describes an analogous process to the Hoechst-Wacker process in which to prepare carbonyl compounds an olefin, oxygen and water are contacted with a solid anion-exchange resin treated with palladium chloride in acid solution. These processes provide carbonyl compounds in considerably high yields, but still encounter the problems of homogeneous systems because the catalyst system contains a large quantity of halogen.

There are also known a method (Japanese Patent Publication No. 11734/1972) which employs a molybdenum oxide-tin oxide catalyst and a method (Japanese Patent Publication No. 19250/1972) which employs a palladium-vanadium oxide catalyst. These processes are also disadvantageous in that the reaction temperature is comparatively high, the selectivity for ketones is poor in oxidation of an olefin having more than 4 carbon atoms, and the catalyst is deactivated easily. Thus they have not yet been put to practical use.

US 3 755 423 describes the preparation of unsaturated diesters by reacting a conjugated diene in the liquid phase with a carbonylic acid and oxygen in the presence of a catalyst comprising elemental palladium and tellurium, selenium, antimony or bismuth. It does not describe a route to aldehydes or ketones.

It is an object of the present invention to provide a new process for producing aldehydes and/or ketones in high yields at low temperatures from an olefin of high carbon number, such as butene, which results in the industrially important solvent, methyl ethyl ketone. The present invention is based on the finding that this may be achieved without using halogens with a catalyst prepared by adding certain metals, to be described, such as tellurium, to palladium.

Summary of the invention

The gist of the present invention is that an effective process for producing aldehydes and/or ketones comprises bringing an olefin into contact with molecular oxygen and water or water vapor in the presence of a solid catalyst containing palladium metal and one or more metals selected from the group consisting of tellurium, selenium, antimony and bismuth and in the substantial absence of a halogen-containing catalyst.

Detailed description of the invention

Solid catalyst

The solid catalyst used in this invention is prepared by supporting on a proper carrier, palladium metal and one or more metals selected from the group consisting of tellurium, selenium, antimony and bismuth.

The carrier that supports the above-mentioned metal or metal compound (referred to as catalyst component hereinafter) is not specifically limited. One may use, for instance, activated carbon, alumina, silica, silica-alumina, zeolite, diatomaceous earth, zirconia, titania, and magnesia. Preferred among them is activated carbon.

The catalyst component may be supported on the carrier by the following methods. In one procedure, the catalyst component is dissolved in water, an aqueous solution of mineral acid such as hydrochloric acid and nitric acid, or an organic solvent, and the carrier is dipped in the resulting solution, followed by heating and drying. In another procedure, after dipping and adsorption, the solution of the catalyst component is removed by filtration or decantation, and the carrier is dried, or washed, if required, or calcined. The supporting procedure may be accomplished in a single stage by dipping the carrier in a solution containing all the catalyst components, or by dipping the carrier in solutions, each containing one catalyst component, successively.

The quantity of the catalyst component to be supported on the carrier should be 0.01 to 10 wt.%, preferably 0.1 to 3 wt.%, as palladium metal; and 0.01 to 10 wt.%, preferably 0.1 to 3 wt.%, as tellurium, selenium, antimony, and bismuth individually. The ratio of tellurium, selenium, antimony, and bismuth to palladium should be 0.01 to 10 gram atom, particularly 0.05 to 5 gram atom, per 1 gram atom of palladium.

2

The solid catalyst thus prepared should preferably be treated, prior to use, with hydrogen gas or a reducing organic compound such as hydrazine, formalin, and methanol, at 100° to 500°C for 0.5 to 10 hours.

Olefin

The olefin used in this invention includes olefins having 2 to 20 carbon atoms, both monoolefins having one carbon-carbon double bond and diolefins having two double bonds. Preferred olefins are linear monoolefins having 2 to 12 carbon atoms.

Examples of such olefins include ethylene, propylene, 1-butene, 2-butene, 1-pentene, 2-pentene, 1-hexene, 2-hexene, 3-hexene, 1-heptene, 2-heptene, 1-octene, and 2-octene. These compounds may be used individually or in combination. For example, 1-butene may be oxidised to methyl ethyl ketone by the process of the invention. The process of this invention permits the presence of saturated aliphatic, saturated alicyclic, and aromatic hydrocarbons and acetylenic hydrocarbons which are detrimental in the Hoechst-Wacker process.

Oxidation reaction of olefin

The process is accomplished by bringing an olefin into contact with molecular oxygen in the presence of water or water vapor with the aid of the above-mentioned solid catalyst.

The reaction may be carried out batchwise or continuously in the presence of the solid catalyst. The solid catalyst may be present in a fixed bed or fluidized bed or dispersed in the reaction medium.

The molecular oxygen used includes oxygen gas and an oxygen-containing gas such as air. The process may be carried out in the presence of an inert gas such as nitrogen gas, carbonic acid gas, methane, and ethane.

The reaction conditions are not specifically limited but the reaction temperature is desirably 50° to 200°C, preferably 80° to 150°C; the reaction pressure is desirably normal pressure to 50 atmospheres; and the molar ratio of olefin/molecular oxygen/water or water vapor is desirably 1/0.1—20/1—40, preferably 1/0.5—12/5—20. The rate of contact of molecular oxygen and water or water vapor with the solid catalyst should be 50 to 10,000, preferably 200 to 2,000, in terms of GHSV (gas hour space velocity) in the case where the reaction is carried out in the gas phase flow system.

Effect of the invention

According to the process of this invention, it is possible to produce aldehydes or ketones in higher yields at low temperatures than when employing a conventional solid catalyst. Because of the absence of a halogen-containing catalyst, the process of this invention does not encounter corrosion of apparatus and halogenated by-products which are inevitable in the Hoechst-Wacker method.

The invention is now described in detail, though only by way of illustration, with reference to the following examples, in which % (percent) is wt.% unless otherwise specified.

Example 1

Preparation of solid catalyst

Activated carbon (20 g) previously treated with refluxing 15% nitric acid for 15 hours, was dipped in a solution of 0.68 g of palladium chloride ($PdCl_2$) dissolved in 60 ml of 0.5 N hydrochloric acid, and allowed to stand at room temperature for 24 hours. The treated activated carbon was separated from the solution, washed with water, and then dried in an oven at 110°C for 12 hours. Thus, activated carbon carrying palladium chloride was prepared. This activated carbon was then dipped in a solution of 0.422 g of tellurium tetrachloride ($TeCl_4$) dissolved in 80 ml of methanol, and allowed to stand for 12 hours. After removal of the solution by filtration, the treated activated carbon was dried in a nitrogen stream at 150°C for 3 hours, and then subjected to reduction treatment at 200°C for 2 hours and then at 400°C for 1 hour with nitrogen gas saturated with methanol at room temperature. Thus, a solid catalyst (A) was prepared which contains 2.05% of palladium and 0.74% of tellurium, with the atom ratio of tellurium to palladium being 0.3. This catalyst was found to contain a trace of chlorine.

Oxidation of 1-butene

A mixed gas of 1-butene, air, and water vapor (at a molar ratio of 1/5/12) was supplied at a rate of 300 cc/min (GHSV=1,200) to a stainless steel reaction tube, 18 mm inside diameter, filled with 15 cc of the solid catalyst (A) prepared in the above step. The reaction was carried out continuously at 100°C under normal pressure. Five hours after the start of reaction, the reaction product was analyzed to obtain the space time yield and selectivity for methyl ethyl ketone (MEK). The results are shown in Table 1.

Comparative Example 1

Preparation of solid catalyst

A solid catalyst (B) carrying 2.0% of palladium was prepared as in Example 1, except that treatment with the tellurium tetrachloride solution was not performed.

Oxidation of 1-butene

The oxidation reaction of 1-butene was carried out as in Example 1, except that the solid catalyst (B) obtained in the above step was used. The results are shown in Table 1.

As is apparent from Table 1, the palladium-activated carbon catalyst [solid catalyst (B)] resulted in very poor space time yields and selectivity for MEK, with predominant side reactions other than the Hoechst-Wacker reaction, whereas the catalyst of this invention provided good space time yields and selectivity for MEK.

TABLE 1

|  | Example 1 | Comparative Example 1 |
|---|---|---|
| Solid catalyst |  |  |
| Designation | A | B |
| Composition | Pd-Te | Pd |
| (metal content %) | (2.05/0.74) | (2.0) |
| Space time yields of MEK (g/catalyst-liter/hour) | 4.9 | 0.03 |
| Selectivity (%) |  |  |
| MEK | 98.1 | 2.4 |
| MVK[1] | Trace | 30.8 |
| CA[2] | Trace | 73.7 |
| Others | 1.9 | 3.1 |

Note:
[1] methyl vinyl ketone
[2] crotonaldehyde.

This note is also applicable to the following tables.

Example 2
Preparation of solid catalyst
Activated carbon (10 g) previously treated with refluxing 15% nitric acid for 6 hours was dipped in a solution of 0.34 g of palladium chloride and 0.125 g of tellurium dioxide ($TeO_2$) dissolved in 40 ml of 6 N hydrochloric acid. The solution was evaporated to dryness, and the activated carbon was dried in an oven at 110°C for 12 hours. Thus, activated carbon carrying palladium chloride and tellurium dioxide was prepared. The treated activated carbon was dried in a nitrogen stream at 150°C for 3 hours, and then subjected to reduction treatment at 200°C for 2 hours and then at 400°C for 1 hour with nitrogen gas saturated with methanol at room temperature. Thus, a solid catalyst (C) was prepared which contains 2.0% of palladium and 1.0% of tellurium. This catalyst was found to contain a trace of chlorine.

Oxidation of 1-butene
Oxidation of 1-butene was performed as in Example 1, except that a mixed gas of 1-butene, air, and water vapor was supplied at a rate of 150 cc/min (GHSV=600). The results are shown in Table 2.

Examples 3 to 5
Preparation of solid catalyst
Solid catalysts (D, E, and F) were prepared as in Example 2, except that tellurium dioxide was replaced by selenium dioxide ($SeO_2$), bismuth trioxide ($Bi_2O_3$), and antimony trichloride ($SbCl_3$), respectively. These three solid catalysts contained metal as shown in Table 2 and a trace amount of chlorine.

Oxidation of 1-butene
Oxidation of 1-butene was performed as in Example 2, except that the three kinds of solid catalysts as obtained in the above step were used. The results are shown in Table 2.
As is apparent from Table 2, these three solid catalysts provided better space time yields and selectivity for MEK as compared with Comparative Example 1.

4

TABLE 2

| | Example 2 | Example 3 | Example 4 | Example 5 |
|---|---|---|---|---|
| Solid catalyst | | | | |
| Designation | C | D | E | F |
| Composition | Pd-Te | Pd-Se | Pd-Bi | Pd-Sb |
| (metal content %) | (2.0/1.0) | (2.0/0.65) | (2.0/1.6) | (2.0/0.86) |
| Space time yields of MEK | 1.6 | 0.98 | 1.3 | 0.29 |
| (g/catalyst-liter/hour) | | | | |
| Selectivity (%) | | | | |
| MEK | 83.1 | 92.2 | 69.2 | 21.6 |
| MVK | 10.0 | 6.9 | 19.4 | 42.4 |
| CA | 3.8 | Trace | 8.4 | 31.8 |
| Others | 3.1 | 0.93 | 3.0 | 4.2 |

Examples 6 to 8

Three kinds of solid catalyst (G, H, and I) with different quantities of tellurium were prepared as in Example 2. Using these catalysts, oxidation of butene-1 was carried out as in Example 2. The results are shown in Table 3.

TABLE 3

| | Example 6 | Example 7 | Example 8 |
|---|---|---|---|
| Solid catalyst | | | |
| Designation | G | H | I |
| Composition | Pd-Te | Pd-Te | Pd-Te |
| (metal content %) | (2.0/0.2) | (2.0/0.4) | (2.0/2.0) |
| Space time yields of MEK | 0.83 | 1.54 | 0.90 |
| (g/catalyst-liter/hour) | | | |
| Selectivity (%) | | | |
| MEK | 54.1 | 83.4 | 97.1 |
| MVK | 29.8 | 11.3 | 2.9 |
| CA | 12.0 | 3.8 | Trace |
| Others | 4.1 | 1.5 | 0.02 |

**Claims**

1. A process for producing aldehydes and/or ketones which comprises bringing a mono- or diolefin having from 2 to 20 carbon atoms into contact with molecular oxygen and water or water vapor in the presence of a supported solid catalyst comprising palladium metal and one or more metals selected from tellurium, selenium, antimony and bismuth and in the substantial absence of a halogen-containing catalyst.

2. A process according to claim 1, in which the olefin is a linear monoolefin having from 2 to 12 carbon atoms.

3. A process according to claim 2, in which the olefin is 1-butene and the products comprise methyl ethyl ketone.

4. A process according to any of claims 1 to 3 in which the reaction temperature is 50° to 200°C, the pressure is atmospheric to 50 atmospheres and the molar ratio of olefin/molecular oxygen/water or water vapor is 1/0.1—20/1—40.

5. A process according to claim 4 in which the reaction temperature is 80° to 150°C and said molar ratio is 1/0.5—12/5—20.

6. A process according to any of claims 1 to 5, in which the catalyst comprises palladium and tellurium on an activated carbon support.

7. A process according to any of claims 1 to 5, in which the catalyst contains 0.01 to 10 weight percent of palladium and 0.01 to 10 weight percent of tellurium, selenium, antimony or bismuth (calculated as metal) as catalyst components which are supported on a carrier.

8. A process according to claim 7, in which the ratio of tellurium, selenium, antimony or bismuth to palladium in the catalyst is 0.01 to 10 gram atom per 1 gram atom of palladium.

9. A process according to any of claims 1 to 8, in which the solid catalyst is formed by impregnation of a carrier with one or more solutions of catalyst components and subjecting the treated carrier to a reducing treatment to obtain a substantially halogen-free solid catalyst.

10. The use of a supported solid catalyst comprising palladium metal and one or more metals selected from tellurium, selenium, antimony and bismuth in the preparation aldehydes and/or ketones by contacting a mono- or diolefin having from 2 to 20 carbon atoms with molecular oxygen and water or water vapor in the presence of that catalyst and in the substantial absence of a halogen-containing catalyst.

**Patentansprüche**

1. Verfahren zur Herstellung von Aldehyden und/oder Ketonen, dadurch gekennzeichnet, daß ein Mono- oder Diolefin mit 2 bis 20 Kohlenstoffatomen in Gegenwart eines auf einem Träger befindlichen festen Katalysators, welcher Palladium-Metall und ein oder mehrere Metalle ausgewählt aus Tellur, Selen, Antimon und Wismuth enthält, und in wesentlicher Abwesenheit eines halogenhaltigen Katalysators mit molekularem Sauerstoff und Wasser oder Wasserdampf in Berührung gebracht wird.

2. Verfahren gemäß Anspruch 1, worin das Olefin ein lineares Monoolefin mit 2 bis 12 Kohlenstoffatomen ist.

3. Verfahren gemäß Anspruch 2, worin das Olefin 1-Buten ist und die Produkte Methyl-ethyl-keton umfassen.

4. Verfahren gemäß einem der Ansprüche 1 bis 3, worin die Reaktionstemperatur 50—200°C beträgt, der Druck Normaldruck bis 50 Atmosphären beträgt und das Molverhältnis von Olefin/molekularer Sauerstoff/Wasser oder Wasserdampf 1/0,1—20/1—40 beträgt.

5. Verfahren gemäß Anspruch 4, worin die Reaktionstemperatur 80—150°C beträgt und das genannte Molverhältnis 1/0,5—12/5—20 beträgt.

6. Verfahren gemäß einem der Ansprüche 1 bis 5, worin der Katalysator Palladium und Tellur auf einem Träger aus aktiviertem Kohlenstoff umfaßt.

7. Verfahren gemäß einem der Ansprüche 1 bis 5, worin der Katalysator 0,01—10 Gew.-% Palladium und 0,01—10 Gew.-% Tellur, Selen, Antimon oder Wismuth (berechnet als Metall) als Katalysatorbestandteile enthält, welche auf einen Träger aufgebracht sind.

8. Verfahren gemäß Anspruch 7, worin das Verhältnis von Tellur, Selen, Antimon oder Wismuth zu Palladium im Katalysator 0,01—10 Grammatom pro 1 Grammatom Palladium beträgt.

9. Verfahren gemäß einem der Ansprüche 1 bis 8, worin der feste Katalysator gebildet wird, indem man einen Träger mit einer oder mehreren Lösungen von Katalysatorbestandteilen imprägniert und den behandelten Träger einer reduzierenden Behandlung unterwirft, um einen im wesentlichen halogenfreien festen Katalysator zu erhalten.

10. Verwendung eines auf einem Träger befindlichen, festen Katalysators, welcher Palladiummetall und ein oder mehrere Metalle ausgewählt aus Tellur, Selen, Antimon und Wismuth enthält, zur Herstellung von Aldehyden und/oder Ketonen durch Inberührungbringen eines Mono- oder Diolefins mit 2 bis 20 Kohlenstoffatomen mit molekularem Sauerstoff und Wasser oder Wasserdampf in Gegenwart diese Katalysators und in wesentlicher Abwesenheit eines halogenhaltigen Katalysators.

**Revendications**

1. Procédé de production d'aldéhydes et/ou de cétones, qui consiste à faire entrer une mono-oléfine ou une dioléfine ayant 2 à 20 atomes de carbone en contact avec de l'oxygène moléculaire et de l'eau ou de la vapeur d'eau en présence d'un catalyseur solide fixé sur un support, comprenant du palladium métallique et un ou plusieurs métaux choisis entre le tellure, le sélénium, l'antimoine et le bismuth et en l'absence quasi-totale d'un catalyseur contenant un halogène.

2. Procédé suivant la revendication 1, dans lequel l'oléfine est une mono-oléfine linéaire ayant 2 à 12 atomes de carbone.

3. Procédé suivant la revendication 2, dans lequel l'oléfine est le 1-butène et les produits comprennent de la méthyléthylcétone.

4. Procédé suivant l'une quelconque des revendications 1 à 3, dans lequel la température de réaction va de 50 à 200°C, la pression va de la pression atmosphérique à 50 atmosphères et la proportion molaire oléfine/oxygène moléculaire/eau ou vapeur d'eau est de 1/0,1—20/1—40.

5. Procédé suivant la revendication 4, dans lequel la température de réaction va de 80 à 150°C et ladite proportion molaire est de 1/0,5—12/5—20.

6. Procédé suivant l'une quelconque des revendications 1 à 5, dans lequel le catalyseur comprend du palladium et du tellure fixé sur un support formé de carbone activé.

7. Procédé suivant l'une quelconque des revendications 1 à 5, dans lequel le catalyseur contient 0,01 à 10% en poids de palladium et 0,01 à 10% en poids de tellure, sélénium, antimoine ou bismuth (calculé en métal) comme composants catalyseurs qui sont fixés sur un support.

8. Procédé suivant la revendication 7, dans lequel le rapport du tellure, du sélénium, de l'antimoine ou du bismuth au palladium dans le catalyseur est de 0,01 à 10 atomes-grammes par atome-gramme de palladium.

9. Procédé suivant l'une quelconque des revendications 1 à 8, dans lequel le catalyseur solide est formé par imprégnation d'un support avec une ou plusieurs solutions de composants catalyseurs et exposition du support traité à un traitement de réduction pour obtenir un catalyseur solide pratiquement dépourvu d'halogène.

10. Utilisation d'un catalyseur solide fixé sur un support comprenant du palladium métallique et un ou plusieurs métaux choisis entre tellure, sélénium, antimoine et bismuth dans la préparation d'aldéhydes et/ou de cétones par mise en contact d'une mono-oléfine ou d'une dioléfine ayant 2 à 20 atomes de carbone avec de l'oxygène moléculaire, de l'eau ou de la vapeur d'eau en présence de ce catalyseur et en l'absence quasi-totale d'un catalyseur contenant un halogène.